# EUROPEAN PATENT SPECIFICATION

(11) **EP 4 507 250 B1**
(45) Date of publication and mention of the grant of the patent: **30.09.2026**
(21) Application number: 23795266.8
(22) Date of filing: 23.04.2023
(51) Int. Cl.: H04L 12/00, H04Q 11/00, H04L 12/12

(54) **OPTICAL ACCESS DEVICE AND OPTICAL ACCESS METHOD AND SYSTEM**
OPTISCHE ZUGANGSVORRICHTUNG UND OPTISCHES ZUGANGSVERFAHREN UND SYSTEM
DISPOSITIF D'ACCÈS OPTIQUE, ET PROCÉDÉ ET SYSTÈME D'ACCÈS OPTIQUE

(30) Priority: 29.04.2022 CN 202210466534
(43) Date of publication of application: 12.02.2025
(73) Proprietor: Huawei Technologies Co., Ltd., Shenzhen, Guangdong 518129 (CN)
(72) Inventor: LIN, Liankui, Shenzhen, Guangdong 518129 (CN); YAN, Linzhi, Shenzhen, Guangdong 518129 (CN); ZHANG, Lun, Shenzhen, Guangdong 518129 (CN)
(74) Representative: Thun, Clemens
(86) International application number: PCT/CN2023/090022
(87) International publication number: WO 2023/207833

(56) References cited:
- WO-A1-2016/132088
- CN-A- 101 197 627
- CN-A- 101 741 712
- CN-A- 102 394 776
- US-B2- 8 908 692

## Description

### TECHNICAL FIELD

This application relates to the optical access field, and more specifically, to an optical access device, an optical access method, and a system.

### BACKGROUND

With evolution of an access network system, a single-wavelength transmission rate has increased from 10G to 50G, and will develop towards 100G in the future. As a system capacity is increasingly large, power consumption of a device is also increasingly high. Therefore, how to reduce unnecessary data forwarding and implement application of a green, energy-saving, and intelligent network becomes an urgent problem to be resolved.

Document US8908692 B2 discloses a device, which can be an OLT, for realizing upstream aggregation and downstream translation of a virtual local area network, VLAN. The device includes a buffer and a processor. The buffer is used for storing an ingress VLAN translation table and an egress VLAN translation table. The processor is used for translating an upstream packet inputted from a first user port into an upstream translation packet according to the ingress VLAN translation table, and transmitting the upstream translation packet to the Internet through an internet port, and translating a first downstream packet inputted from the internet port into a first downstream translation packet according to the egress VLAN translation table, and transmitting the first downstream translation packet to a user device through a second user port.

### SUMMARY

This application provides an optical access device, an optical access method, and a system. The optical access device provided in this application can implement fast forwarding of a service based on information about a service packet, so as to improve communication quality, save energy, and improve user experience.

According to a first aspect, an embodiment of this application provides an optical access device. The device includes: a network processing unit, a service flow forwarding unit, a service scheduling management unit, and at least two passive optical network PON ports. The network processing unit is configured to: after receiving a first downlink data packet, obtain service packet information of the first downlink data packet. The service packet information includes address information, a priority, and protocol information of a service packet, and the first downlink data packet is an initial data packet of a service flow. The network processing unit determines, based on service attribute information corresponding to the service packet information, that a forwarding egress of a second downlink data packet is a first PON port of the at least two PON ports, and establishes a correspondence between the service packet information corresponding to the first downlink data packet and the first PON port. The service attribute information includes at least one of the following: a service flow attribute, a priority, a type, a traffic volume, a customer package type, and time of arrival of the first downlink data packet or the second downlink data packet. The network processing unit sends the correspondence to the service flow forwarding unit for storage. The network processing unit is further configured to: after receiving the second downlink data packet, obtain service packet information of the second downlink data packet. The service flow forwarding unit determines, based on the stored correspondence between the service packet information and the first PON port, that a forwarding port of the second downlink data packet is the first PON port. The second downlink data packet is a data packet other than the first downlink data packet of the service flow. The service scheduling management unit is configured to send the first downlink data packet and the second downlink data packet to the first PON port. The at least two PON ports are configured to send the first downlink data packet and the second downlink data packet.

For example, the address information of the service packet may be a destination/source media access control (media access control, MAC) address or a destination/source internet protocol (internet protocol, IP) address. The protocol information of the service packet may be transmission control protocol (transmission control protocol, TCP) or user datagram protocol (user datagram protocol, UDP) packet header information.

In addition, the service flow attribute may include a type of the service flow, service bandwidth, a service delay, a service jitter, or the like.

Based on the foregoing solution, in this application, the correspondence between the service packet information and the PON port is established. When the optical access device receives a non-initial data packet of the service packet and forwards the data packet again, the optical access device in this application does not perform deep parsing on the non-initial data packet again, but directly sends the data packet to the corresponding PON port based on the established correspondence. The optical access device provided in this application can implement fast forwarding of a service data packet, so as to improve communication efficiency and save power.

With reference to the first aspect, in some implementations of the first aspect, the network processing unit is further configured to send the first downlink data packet to the service scheduling management unit.

Based on the foregoing solution, after performing the deep parsing on the initial data packet of the service flow, the access device provided in this application forwards the initial data packet based on the correspondence.

With reference to the first aspect, in some implementations of the first aspect, the service scheduling management unit sends the first downlink data packet or the second downlink data packet to the first PON port based on the service attribute information.

With reference to the first aspect, in some implementations of the first aspect, the device further includes a service distribution unit. The service distribution unit is configured to: receive the first downlink data packet and the second downlink data packet, and send the first downlink data packet and the second downlink data packet to the network processing unit.

With reference to the first aspect, in some implementations of the first aspect, the device further includes a private line straight-through unit. The private line straight-through unit is configured to transparently transmit the first downlink data packet and the second downlink data packet that correspond to a private line service to a second PON port of the at least two PON ports.

Based on the foregoing solution, for the private line service, the access device provided in this application may directly perform transparent transmission via the private line straight-through unit, without performing centralized processing and forwarding, so that an ultra-low latency can be implemented.

With reference to the first aspect, in some implementations of the first aspect, the device further includes a service resource collaborative unit, and the network processing unit is further configured to send the service attribute information to the service resource collaborative unit. The service resource collaborative unit determines a resource reservation policy or a resource orchestration policy based on the service attribute information.

With reference to the first aspect, in some implementations of the first aspect, the device further includes at least one PON module/board. The at least one PON module/board performs slice or timeslot processing on packets in the first downlink data packet and the second downlink data packet according to the resource reservation policy or the resource orchestration policy, and performs orchestration and transmission based on a preset PON frame format.

Based on the foregoing solution, the access device provided in this application has a capability of supporting a hard slice and a hard timeslot. To be specific, a PON may perform downlink access in a time division multiplexing (time division multiplexing, TDM) data transmission mode or a data transmission mode in which TDM can be used for combination. Slice or timeslot processing is performed on the packets, so that bandwidth, delay, and jitter requirements of a delay-sensitive service can be met while service flow security isolation is implemented.

With reference to the first aspect, in some implementations of the first aspect, at least one PON module/board is further configured to add a first identifier to the first downlink data packet and the second downlink data packet, where the first identifier identifies the service flow as a hard timeslot service.

With reference to the first aspect, in some implementations of the first aspect, the device further includes a first dynamic bandwidth allocation unit and at least one PON module/board. The service scheduling management unit is configured to: receive an uplink bandwidth request, and send a scheduling policy and the uplink bandwidth request to the first dynamic bandwidth allocation unit, where the scheduling policy includes: uplink interface bandwidth, a system forwarding capability, user access request bandwidth, a user service flow priority, a service value, a service delay, and a service jitter indicator requirement. The first dynamic bandwidth allocation unit is configured to: receive the scheduling policy and the uplink bandwidth request, and determine valid bandwidth of the at least one PON module/board based on the scheduling policy, the uplink bandwidth request, a capability of the at least one PON module/board, and the uplink interface bandwidth.

Based on the foregoing solution, the access device provided in this application implements system-level bandwidth allocation via the first dynamic bandwidth allocation unit based on the scheduling policy, the uplink bandwidth request, the capability of the PON module/board, and the uplink interface bandwidth, so as to improve accuracy of uplink bandwidth allocation, and avoid a waste of an uplink resource, thereby saving power.

With reference to the first aspect, in some implementations of the first aspect, the at least one PON module/board includes a second dynamic bandwidth allocation unit, and the second dynamic bandwidth allocation unit is configured to determine uplink bandwidth configurations of the at least two PON ports based on the valid bandwidth.

Based on the foregoing solution, the PON module/board of the access device provided in this application further includes the second dynamic bandwidth allocation unit. The second dynamic bandwidth allocation unit is combined with the first dynamic bandwidth allocation unit, so that PON port-level uplink bandwidth allocation can be implemented, thereby improving accuracy of uplink bandwidth allocation and saving power.

With reference to the first aspect, in some implementations of the first aspect, the device further includes an optical transport network OTN interface and an Ethernet interface. The OTN interface is configured to connect to an OTN network in an uplink direction, to implement an OTN connection service. The Ethernet interface is configured to connect to an IP network in the uplink direction, to implement an internet protocol IP service.

Based on the foregoing solutions, the access device provided in this application can be extended to support an OTN private line service and an Ethernet private line service, and can support application requirements in a plurality of scenarios.

With reference to the first aspect, in some implementations of the first aspect, the device further includes an acceleration engine, where the acceleration engine is configured to accelerate a service.

According to a second aspect, an embodiment of this application provides an optical access method. The method is applied to an optical access device, or may be performed by a chip or a circuit configured in the optical access device. This is not limited in this application. The method includes: after receiving a first downlink data packet, obtaining service packet information of the first downlink data packet, where the service packet information includes address information, a priority, and protocol information of a service packet, and the first downlink data packet is an initial data packet of a service flow; determining, based on service attribute information corresponding to the service packet information, that a forwarding egress of a second downlink data packet is a first PON port; establishing a correspondence between the service packet information corresponding to the first downlink data packet and the first PON port, and storing the correspondence, where the service attribute information includes at least one of the following: a service flow attribute, a priority, a type, a traffic volume, a customer package type, and time of arrival of the first downlink data packet or the second downlink data packet; after receiving the second downlink data packet, obtaining service packet information of the second downlink data packet; determining, based on the correspondence between the service packet information and the first PON port, that a forwarding port of the second downlink data packet is the first PON port, where the second downlink data packet is a data packet other than the first downlink data packet of the service flow; sending the first downlink data packet and the second downlink data packet to the first PON port; and sending the first downlink data packet and the second downlink data packet.

With reference to the second aspect, in some implementations of the second aspect, the method further includes: storing the correspondence between the service packet information and the first PON port.

With reference to the second aspect, in some implementations of the second aspect, the method further includes: sending the first downlink data packet or the second downlink data packet to the first PON port based on the service attribute information.

With reference to the second aspect, in some implementations of the second aspect, the method further includes: transparently transmitting the first downlink data packet and the second downlink data packet that correspond to a private line service.

With reference to the second aspect, in some implementations of the second aspect, the method further includes: determining a resource reservation policy or a resource orchestration policy based on the service attribute information.

With reference to the second aspect, in some implementations of the second aspect, the method further includes: performing slice or timeslot processing on packets in the first downlink data packet and the second downlink data packet according to the resource reservation policy or the resource orchestration policy, and performing orchestration and transmission based on a preset PON frame format.

With reference to the second aspect, in some implementations of the second aspect, the method further includes: adding a first identifier to the first downlink data packet and the second downlink data packet, where the first identifier identifies the service flow as a hard timeslot service.

With reference to the second aspect, in some implementations of the second aspect, the method further includes: receiving an uplink bandwidth request, and sending a scheduling policy and the uplink bandwidth request, where the scheduling policy includes: uplink interface bandwidth, a system forwarding capability, user access request bandwidth, a user service flow priority, a service value, a service delay, and a service jitter indicator requirement; and receiving the scheduling policy and the uplink bandwidth request, and determining valid bandwidth of at least one PON module/board based on the scheduling policy, the uplink bandwidth request, a capability of the at least one PON module/board, and the uplink interface bandwidth.

With reference to the second aspect, in some implementations of the second aspect, the method further includes: determining uplink bandwidth configurations of the at least two PON ports based on the valid bandwidth.

According to a third aspect, an embodiment of this application provides a network system. The system includes an optical line terminal OLT and a plurality of optical network units ONUs. The OLT and the ONU communicate with each other through at least one downlink wavelength channel and one or more uplink wavelength channels, where the OLT includes the device in any one of the first aspect or the possible implementations of the first aspect.

According to a fourth aspect, an embodiment of this application provides a chip. The chip includes a processor and a communication interface. The communication interface is configured to receive a signal from a communication apparatus other than the communication apparatus and transmit the signal to the processor. The processor executes code instructions to implement the method in any one of the second aspect or the possible implementations.

According to a fifth aspect, an embodiment of this application provides a computer-readable storage medium. The computer-readable storage medium stores a computer program (which may also be referred to as code or instructions). When the computer program is run on a computer, the computer is enabled to perform the method in any one of the second aspect or the possible implementations of the second aspect.

According to a sixth aspect, an embodiment of this application provides a computer program product. The computer program product includes a computer program. When the computer program is run, the computer is enabled to perform the method in any one of the second aspect or the possible implementations of the second aspect.

According to a seventh aspect, an embodiment of this application provides a communication apparatus. The apparatus includes a processor and a memory, the processor is coupled to the memory, and the processor is configured to control the apparatus to implement the method in any one of the second aspect or the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that a related data exchange process, for example, sending a request message, may be a process of outputting a request message from the processor, and receiving a response message may be a process of receiving the message by the processor. Specifically, data output by the processor may be output to a transmitter, and input data received by the processor may be from a receiver. The transmitter and the receiver may be collectively referred to as a transceiver.

The processing apparatus in the seventh aspect may be a chip, and the processor may be implemented by using hardware, or may be implemented by using software. When the processor is implemented by using hardware, the processor may be a logic circuit, an integrated circuit, or the like. When the processor is implemented by the software, the processor may be a general-purpose processor, and is implemented by reading software code stored in a memory. The memory may be integrated into the processor, or may be located outside the processor and exist independently.

For beneficial effects brought by the second aspect and the seventh aspect, refer to descriptions of beneficial effects in the first aspect. Details are not described herein again.

### BRIEF DESCRIPTION OF DRAWINGS

FIG. 1 is a schematic diagram of an architecture of a PON system to which an embodiment of this application is applicable;
FIG. 2 is a schematic diagram of a structure of an access device 200 according to an embodiment of this application;
FIG. 3 is a schematic diagram of a structure of an access device 300 according to an embodiment of this application;
FIG. 4 is a schematic diagram of a structure of an access device 400 according to an embodiment of this application;
FIG. 5 is a schematic diagram of a structure of an access device 500 according to an embodiment of this application;
FIG. 6 is a schematic diagram of a structure of an access device 600 according to an embodiment of this application;
FIG. 7 is a schematic diagram of a structure of an access device 700 according to an embodiment of this application;
FIG. 8 is a schematic diagram of a structure of an access device 800 according to an embodiment of this application;
FIG. 9 is a schematic flowchart of an optical access method 900 according to an embodiment of this application;
FIG. 10 is a schematic block diagram of an access device 1000 according to an embodiment of this application; and
FIG. 11 is a schematic block diagram of an access device 1100 according to an embodiment of this application.

### DESCRIPTION OF EMBODIMENTS

The following describes technical solutions of this application with reference to accompanying drawings.

First, in the following text descriptions or accompanying drawings in embodiments of this application, terms such as "first", "second", and various numbers are merely used for differentiation for ease of description, and do not need to be used to describe a specific order or sequence, but are not used to limit the scope of embodiments of this application. For example, in this embodiment of this application, the method is used to distinguish between different downlink data packets.

Second, in the following embodiments of this application, the terms "include", "have", and any other variants mean to cover the non-exclusive inclusion, for example, a process, method, system, product, or device that includes a series of steps or units is not necessarily limited to those clearly listed steps or units, but may include another inherent step or unit not clearly listed or inherent to such a process, method, product, or device.

Third, in embodiments of this application, the term, for example, "example", "for example", or the like is used to represent an example, an illustration, or a description. Any embodiment or design scheme described with "example" or "for example" should not be explained as being more preferred or having more advantages than another embodiment or design scheme. A word, for example, "example" or "for example" is used to present a related concept in a specific manner for ease of understanding.

Fourth, in this embodiment of this application, the character "/" generally indicates that the associated objects are in an "or" relationship.

Fifth, in this embodiment of this application, a service flow is a resource carrying service data.

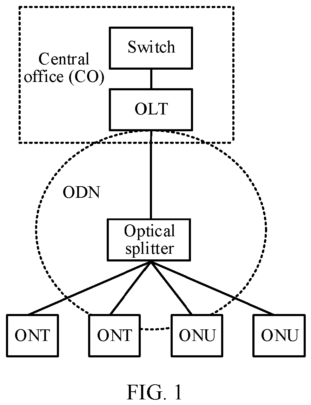

FIG. 1 is a schematic diagram of an architecture of a passive optical network (passive optical network, PON) system to which an embodiment of this application is applicable. A PON technology is a point-to-multipoint fiber access technology. The PON system includes an optical line terminal (optical line terminal, OLT) device, an optical distribution network (optical distribution network, ODN) device, and at least one optical network unit (optical network unit, ONU) device. The OLT device is connected to the ODN device, and the ODN device is connected to a plurality of ONU devices. The OLT device provides a network-side interface. The OLT device is connected to a network-side device (for example, a switch or a router) at an upper layer and is connected to one or more ODN devices at a lower layer.

The ODN device includes a passive optical splitter used for optical power distribution, a feeder fiber connected between a passive optical splitter and the OLT, and a distribution fiber connected between the passive optical splitter and the ONU device. When transmitting downlink data, the ODN device transmits the downlink data of the OLT device to each ONU device via the optical splitter. Similarly, when transmitting uplink data, the ODN device aggregates the uplink data of the ONU device and transmits aggregated uplink data to the OLT device.

Generally, the OLT device is usually located in a central office (central office, CO), and the ONU device is located at or near user's home. The ONU device provides a user-side interface and is connected to the ODN device.

Currently, the OLT device basically uses a centralized processing architecture or a distributed processing architecture. The centralized processing architecture mainly includes a PON line card and a switching processing module. The PON line card is mainly used for line processing at a physical layer and a link layer, and the switching processing module is configured to complete processing and forwarding of all services in the OLT device, and monitoring and management of an entire system. In the distributed processing architecture, a service switching function in the switching processing module is set as an independent module. This reduces dependency on the switching processing module. However, regardless of whether an access network device system uses the centralized processing architecture or the distributed processing architecture, each PON line card needs an independent network processor (network processor, NP)/packet processor (packet processor, PP) to perform corresponding ingress user-level service processing, and the OLT device needs to be provided with an independent service acceleration engine. Therefore, as PON bandwidth gradually increases, the device has higher requirements on a processing capability of the NP/PP and a cache capacity of the service acceleration engine, sharply increasing costs and power consumption of the system.

Based on the foregoing problem, this application proposes an optical access device and a network system. Service attribute information of a service flow is automatically identified in a data forwarding process, and fast service forwarding is implemented based on the service attribute information, to improve communication quality, save energy, and improve user experience. The access device provided in this application has a native automatic acceleration capability, and may be further compatible with an optical transmission network (optical transmission network, OTN) private line service and an Ethernet private line service.

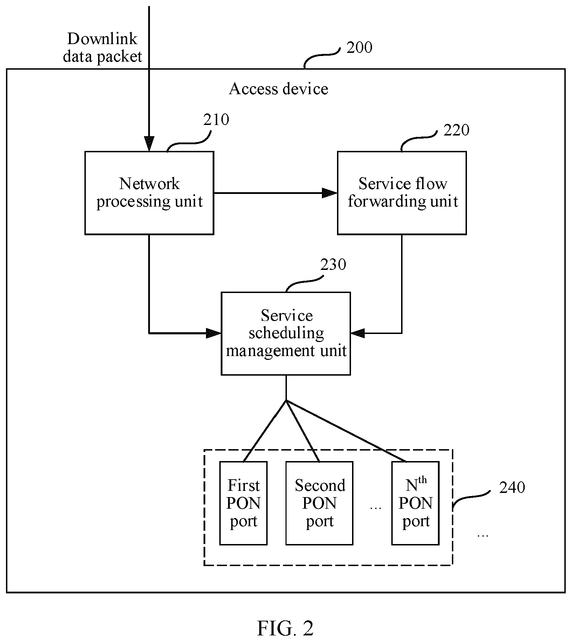

FIG. 2 is a schematic diagram of a structure of an access device 200 according to an embodiment of this application. As shown in FIG. 2, the access device 200 includes: a network processing unit 210, a service flow forwarding unit 220, a service scheduling management unit 230, and at least two passive optical network PON ports 240.

The access device 200 is configured to: receive a downlink data packet of a service flow from an upstream device or an upstream node, and perform different data packet forwarding procedures depending on whether the downlink data packet is an initial downlink data packet (a first downlink data packet is used as an example below) of the service flow or a non-initial downlink data packet (a second downlink data packet is used as an example below) of the service flow.

Specifically, the network processing unit 210 is configured to receive the downlink data packet of the service flow from the upstream device or the upstream node of the access device 200.

In a case in which the access device 200 receives the first downlink data packet, after the network processing unit 210 receives the first downlink data packet, the network processing unit 210 obtains service packet information of the first downlink data packet. The network processing unit 210 obtains, based on the obtained service packet information, service attribute information corresponding to the service packet information, and determines that a forwarding egress of the second downlink data packet is a first PON port of at least two PON ports. In addition, the network processing unit 210 establishes a correspondence between the service packet information corresponding to the first downlink data packet and the first PON port. After the network processing unit 210 establishes the correspondence between the service packet information corresponding to the first downlink data packet and the first PON port, the network processing unit 210 sends the correspondence between the service packet information corresponding to the first downlink data packet and the first PON port to the service flow forwarding unit 220 for storage.

The service packet information includes address information, a priority, and protocol information of a service packet.

For example, the address information of the service packet may be a MAC address, an IP address, or the like. The protocol information of the service packet may be TCP or UDP packet header information, or the like.

The service attribute information includes at least one of the following: a service flow attribute, a priority, a type, a traffic volume, a customer package type, and time of arrival of the first downlink data packet or the second downlink data packet.

The network processing unit 210 is further configured to send the first downlink data packet to the service scheduling management unit 230.

After receiving the first downlink data packet sent by the network processing unit 210, the service scheduling management unit 230 sends the first downlink data packet to the first PON port. After receiving the first downlink data packet, the first PON port forwards the first downlink data packet to a downstream device or a downstream node.

In FIG. 2, the at least two passive optical network PON ports 240 may be considered as belonging to a same PON module/board. In this case, this may be understood as that a PON module/board 240 includes the at least two passive optical network PON ports (a first PON port, a second PON port, ..., an N^{th} PON port). The first PON port is one of the at least two PON ports 240. It should be understood that a quantity of PON modules/boards 240 in FIG. 2 is merely an example, but is not limited. The access device provided in embodiments of this application may further include a plurality of PON modules/boards.

In addition, it should be noted that the network processing unit 210 may send the first downlink data packet to the service scheduling management unit 230 before the network processing unit 210 sends the correspondence between the service packet information corresponding to the first downlink data packet and the first PON port to the service flow forwarding unit 220, or after the network processing unit 210 sends the correspondence between the service packet information corresponding to the first downlink data packet and the first PON port to the service flow forwarding unit 220. This is not limited in this application.

In a case in which the access device 200 receives the second downlink data packet, after receiving the second downlink data packet, the network processing unit 210 obtains service packet information of the second downlink data packet. After the service packet information of the second downlink data packet is obtained, the second downlink data packet is sent to the service flow forwarding unit 220. The service flow forwarding unit 220 determines, based on the stored correspondence between the service packet information and the first PON port, that a forwarding port of the second downlink data packet is the first PON port, and sends the second downlink data packet to the service scheduling management unit 230. After receiving the second downlink data packet, the service scheduling management unit 230 sends the second downlink data packet to the first PON port. After receiving the second downlink data packet, the first PON port forwards the second downlink data packet to the downstream device or the downstream node.

It should be noted that, because the second downlink data packet is the non-initial data packet corresponding to the service flow, the service packet information of the second downlink data packet obtained by the network processing unit 210 is the same as the service packet information of the first downlink data packet. In this case, the network processing unit 210 does not perform deep parsing on the second downlink data packet, and sends the second downlink data packet to the service flow forwarding unit 220, so that after receiving the second downlink data packet, the service flow forwarding unit 220 sends the second downlink data packet based on the stored correspondence between the service packet information and the PON port.

In conclusion, the access device provided in this application does not perform the deep parsing on the non-initial data packet of the service flow, but implements fast forwarding of the non-initial downlink data packet based on the stored correspondence between the service packet information and the PON port, so as to improve communication efficiency and save power of the device.

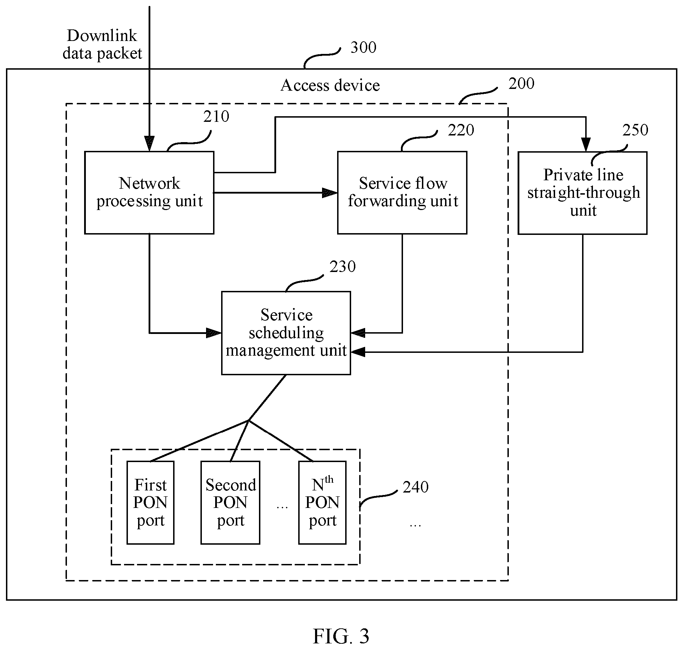

For a specific private line service, to ensure transmission efficiency and reliability of the service, an access device 300 provided in this embodiment of this application may be configured to provide a forwarding service for this type of service. The access device 300 may include a private line straight-through unit 250 configured to forward the private line service on the basis of the access device 200 shown in FIG. 2. FIG. 3 is a schematic diagram of a structure of an access device 300 according to an embodiment of this application. The access device 300 includes a private line straight-through unit 250.

Specifically, a downlink data packet of a private line service flow corresponds to, for example, a service that has a high data access/interconnection requirement and a high service requirement. After receiving a downlink data packet of such a type, the access device (which may be specifically the network processing unit 210) learns, based on service packet information, that data transmitted by the downlink data packet is private line service data, and directly forwards the downlink data packet to the private line straight-through unit 250. The private line straight-through unit 250 is configured to transparently transmit a first downlink data packet and a second downlink data packet that correspond to a private line service to a corresponding PON port, for example, a second PON port. For functions of the network processing unit 210, the service flow forwarding unit 220, the service scheduling management unit 230, and the at least two PON ports 240, refer to related descriptions of corresponding modules in FIG. 2, and details are not described herein again.

It should be understood that the second PON port is a PON port corresponding to the private line service, and may be used to transmit and receive only the private line service, or is allocated as a PON port that is not occupied by another service only in a process of transmitting the private line service. When no private line service is to be transmitted, the second PON port may still be used to transmit another service.

Based on the foregoing solution, the access device provided in this application can implement fast forwarding of the private line service without performing centralized forwarding processing, so that an ultra-low latency can be achieved.

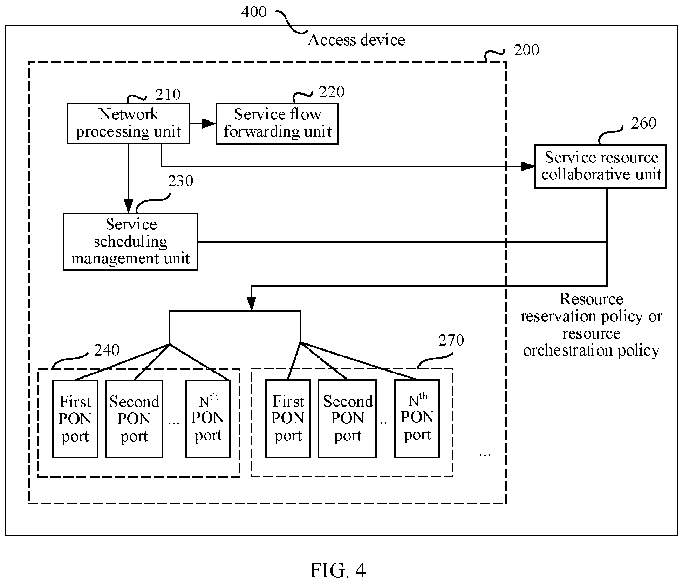

To meet a transmission requirement of a service that requires slice isolation or hard timeslot transmission, FIG. 4 is a schematic diagram of a structure of an access device 400 according to an embodiment of this application. The access device 400 can be used to transmit a hard timeslot service. As shown in FIG. 4, the access device 400 may include a service resource collaborative unit 260 configured to transmit a hard timeslot service on the basis of the access device 200 shown in FIG. 2. Specifically, the access device 400 includes: a network processing unit 210, a service flow forwarding unit 220, a service scheduling management unit 230, a service resource collaborative unit 260, a first PON module/board 240, and a second PON module/board 270. The first PON module/board 240 includes at least two PON ports.

Specifically, after receiving a first downlink data packet, the network processing unit 210 learns of service attribute information of the first downlink data packet based on service packet information, and sends the service attribute information to the service resource collaborative unit 260. The service resource collaborative unit 260 determines a resource reservation policy or a resource orchestration policy based on the service attribute information.

In an implementation, for a conventional service, the service scheduling management unit 230 sends the downlink data packet to the PON module/board 240 or the PON module/board 270 based on the service attribute information, for example, constraint control of bandwidth and a priority. The PON module/board that receives the downlink data packet transmits the downlink data packet to a PON line in a broadcast manner.

In another implementation, for a service that requires slice isolation or hard timeslot transmission, the service scheduling management unit 230 performs resource prediction control on a slice or a hard timeslot, in other words, downlink bandwidth is preferentially used for a hard timeslot service, and sends the downlink data packet to the PON module/board 240 or the PON module/board 270. The PON module/board that receives the downlink data packet performs slice/timeslot processing on a PON frame (for example, a 125 µs frame) according to the resource reservation policy or the resource orchestration policy, and performs orchestration and transmission based on a preset PON frame format.

It should be understood that the "preset" may include "predefine", for example, define in a protocol. The "predefine" may be implemented by saving, in advance in a device, corresponding code, a table, or another format that may indicate related information. A specific implementation of the "predefine" is not limited in this application.

For functions of the network processing unit 210, the service flow forwarding unit 220, the service scheduling management unit 230, and the at least two PON ports 240, refer to related descriptions of corresponding modules in FIG. 2. In addition, for functions of the PON module/board 270, refer to functions of the PON module/board 240 in FIG. 2, and details are not described herein again.

It should be understood that a quantity of PON modules/boards in FIG. 4 is merely an example, but is not limited.

In addition, the access device 400 may alternatively include the service resource collaborative unit 260 configured to transmit the hard timeslot service on the basis of the access device 300 shown in FIG. 3. That is, compared with a part not shown in FIG. 3, FIG. 4 should also fall within the protection scope of this application.

Based on the foregoing solution, the access device provided in this application has a capability of supporting hard slicing and the hard timeslot. To be specific, a PON may access a downlink in a time division multiplexing data transmission mode or a data transmission mode in which broadcast and time division multiplexing are combined, to ensure secure isolation of a service flow, and ensure that determined bandwidth is allocated to a delay-sensitive service, to improve communication quality.

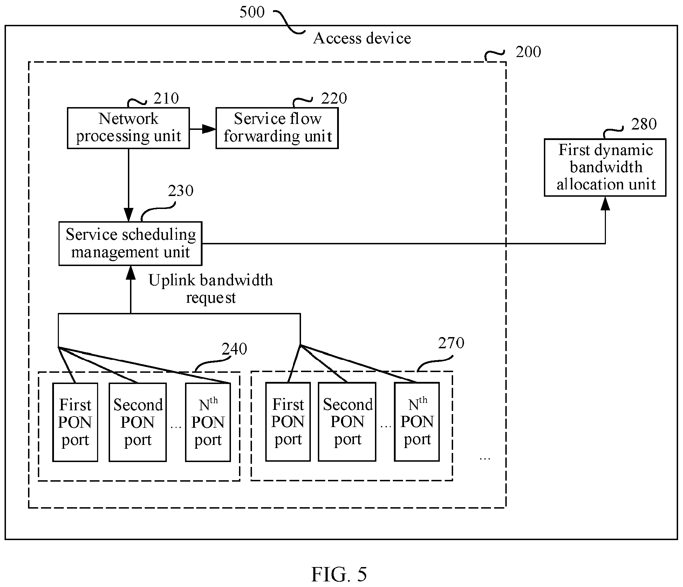

For uplink service transmission, FIG. 5 is a schematic diagram of a structure of an access device 500 according to an embodiment of this application. The access device 500 may include a first dynamic bandwidth allocation unit 280 configured to determine valid bandwidth of a PON module/board on the basis of the access device 200 shown in FIG. 2. Specifically, as shown in FIG. 5, the access device 500 includes: a network processing unit 210, a service flow forwarding unit 220, a service scheduling management unit 230, a first PON module/board 240, a second PON module/board 270, and a first dynamic bandwidth allocation unit 280. The first PON module/board 240 includes at least two PON ports.

Specifically, for uplink service transmission, the first PON module/board 240 or the second PON module/board 270 sends an uplink bandwidth request to the service scheduling management unit 230. The service scheduling management unit 230 is configured to: receive the uplink bandwidth request, and send a scheduling policy and the uplink bandwidth request to the first dynamic bandwidth allocation unit 280, where the scheduling policy includes: uplink interface bandwidth, a system forwarding capability, user access request bandwidth, a user service flow priority, a service value, a service delay, and a service jitter indicator requirement. The first dynamic bandwidth allocation unit 280 is configured to: receive the scheduling policy and the uplink bandwidth request, and determine the valid bandwidth of the PON module/board based on the scheduling policy, the uplink bandwidth request, a capability of the PON module/board, and the uplink interface bandwidth.

Specifically, after receiving the uplink bandwidth request of the PON module/board, the service scheduling management unit 230 not only sends the uplink bandwidth request to the first dynamic bandwidth allocation unit 280, but also forwards the scheduling policy to the first dynamic bandwidth allocation unit 280. The first dynamic bandwidth allocation unit 280 determines the valid bandwidth allocated to the PON module/board based on the scheduling policy and request received from the service scheduling management unit 230 in combination with the capability of the PON module/board and the uplink interface bandwidth.

In a possible implementation, the uplink bandwidth request received by the service scheduling management unit 230 from the PON module/board is generated by performing comprehensive processing based on historical bandwidth for which an ONU applies and a situation of effective utilization by the ONU on the historical bandwidth.

For functions of the network processing unit 210, the service flow forwarding unit 220, the service scheduling management unit 230, and the at least two PON ports 240, refer to related descriptions of corresponding modules in FIG. 2. In addition, for functions of the PON module/board 270, refer to functions of the PON module/board 240 in FIG. 2, and details are not described herein again.

It should be understood that a quantity of PON modules/boards in FIG. 5 is merely an example, but is not limited.

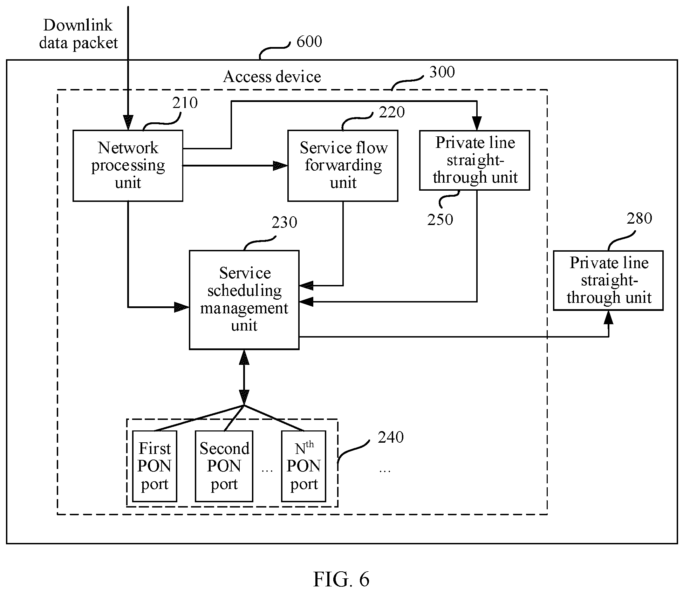

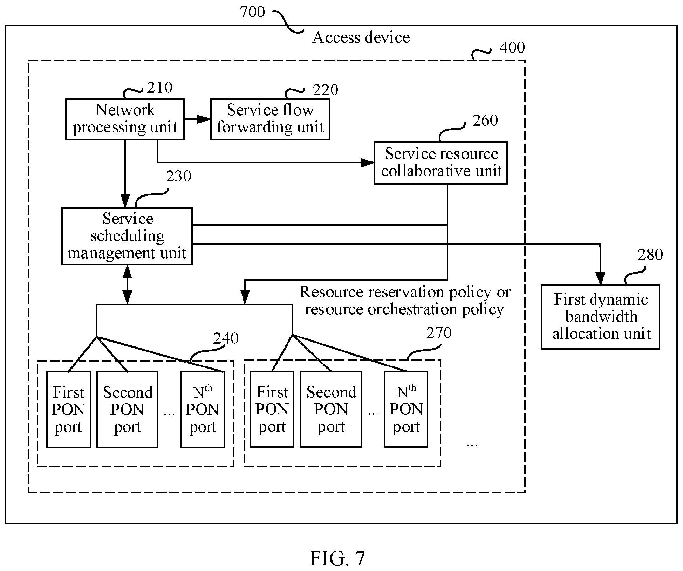

In addition, embodiments of this application further provide schematic diagrams of structures of an access device 600, shown in FIG. 6, by adding the first dynamic bandwidth allocation unit 280 to the access device 300 shown in FIG. 3, and provide an access device 700, shown in FIG. 7, by adding the first dynamic bandwidth allocation unit 280 to the access device 400 shown in FIG. 4. In FIG. 6 and FIG. 7, for functions of the first dynamic bandwidth allocation unit 280, refer to related descriptions in FIG. 5. For functions of other units, refer to descriptions of corresponding units in FIG. 3 or FIG. 4. Details are not described herein again.

Based on the foregoing solution, the access device provided in this application implements system-level bandwidth allocation via the first dynamic bandwidth allocation unit, so as to improve accuracy of uplink bandwidth allocation, and avoid a waste of an uplink resource, thereby saving power.

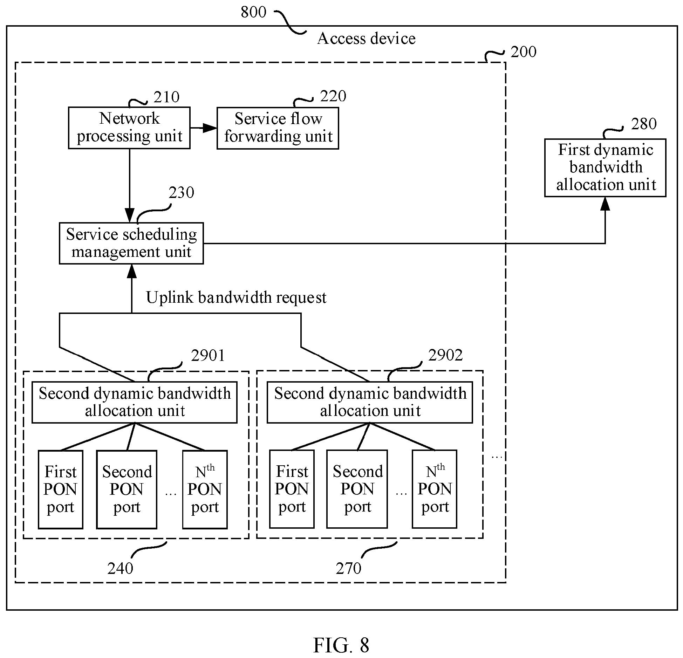

To further improve the accuracy of the uplink bandwidth allocation, on the basis of the access device 500 shown in FIG. 5, an embodiment of this application provides an access device 800 shown in FIG. 8. In a schematic diagram of a structure shown in FIG. 8, the access device 800 includes: a service scheduling management unit 230, a first PON module/board 240, a second PON module/board 270, a first dynamic bandwidth allocation unit 280, and second dynamic bandwidth allocation units 2901 and 2902. The first PON module/board 240 includes at least two PON ports. The second dynamic bandwidth allocation unit 2901 belongs to the first PON module/board 240, and the second dynamic bandwidth allocation unit 2902 belongs to the second PON module/board 270.

Specifically, the second dynamic bandwidth allocation unit 2901 is used as an example. The second dynamic bandwidth allocation unit 2901 is configured to determine, based on valid bandwidth allocated by the first dynamic bandwidth allocation unit 280, uplink bandwidth configurations of the at least two PON ports that are in the PON module/board. Specifically, the second dynamic bandwidth allocation unit 2901 may determine user-level (PON port-level) uplink bandwidth allocation based on a bandwidth constraint rule and a user bandwidth allocation rule that are provided by the first dynamic bandwidth allocation unit 280 in combination with a bandwidth request of an ONU device and historical bandwidth request statistics data of the ONU device, and deliver the uplink bandwidth allocation to the corresponding ONU device.

It should be understood that, functions of the PON port-level uplink bandwidth allocation may alternatively be implemented via the access device 600 shown in FIG. 6 and the access device 700 shown in FIG. 7, to be specific, a corresponding second dynamic bandwidth allocation unit is added to the PON module/board in the access device 600 shown in FIG. 6 or the access device 700 shown in FIG. 7, to implement the user-level uplink bandwidth allocation.

Based on the foregoing solution, the access device provided in this application implements the PON port-level uplink bandwidth allocation via the second dynamic bandwidth allocation unit, to further improve the accuracy of the uplink bandwidth allocation and improve communication quality.

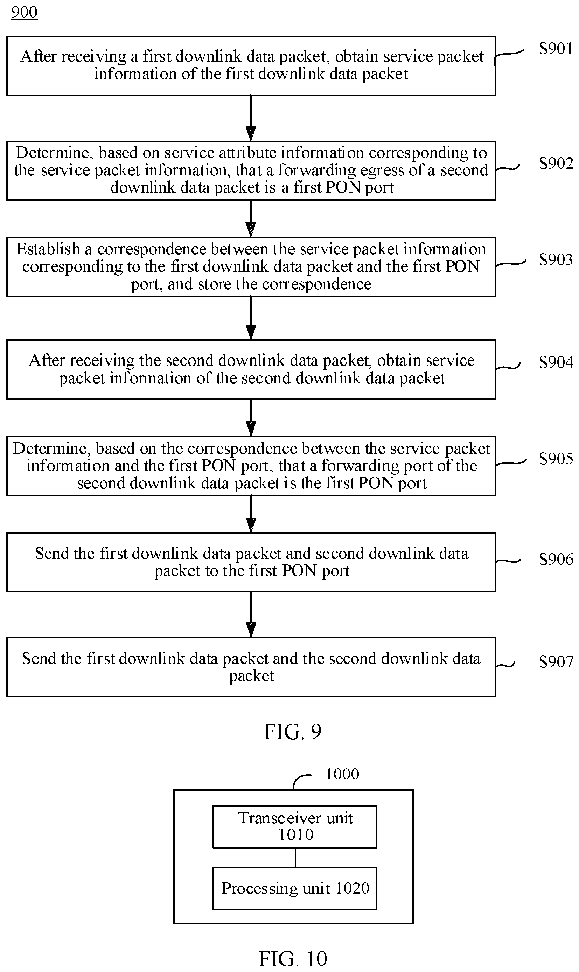

FIG. 9 is a schematic flowchart of an optical transmission method 900 according to an embodiment of this application. Specifically, the method 900 may be applied to the access device 200 shown in FIG. 2. The method 900 is described with reference to FIG. 2. As shown in FIG. 9, the method includes a plurality of steps below.

S901: After receiving a first downlink data packet, obtain service packet information of the first downlink data packet.

Specifically, in the optical access device 200, after receiving the first downlink data packet, a network processing unit 210 obtains the service packet information of the first downlink data packet. The service packet information includes address information, a priority, and protocol information of a service packet, and the first downlink data packet is an initial data packet of a service flow.

S902: Determine, based on service attribute information corresponding to the service packet information, that a forwarding egress of a second downlink data packet is a first PON port.

Specifically, the network processing unit 210 determines, based on the service attribute information corresponding to the service packet information, that the forwarding egress of the second downlink data packet is the first PON port. The service attribute information includes at least one of the following: a service flow attribute, a priority, a type, a traffic volume, a customer package type, and time of arrival of the first downlink data packet or the second downlink data packet.

S903: Establish a correspondence between the service packet information corresponding to the first downlink data packet and the first PON port, and store the correspondence.

Specifically, the network processing unit 210 establishes the correspondence between the service packet information corresponding to the first downlink data packet and the first PON port, and sends the correspondence to a service flow forwarding unit 220 for storage.

S904: After receiving the second downlink data packet, obtain service packet information of the second downlink data packet.

Specifically, the network processing unit 210 continues to receive the second downlink data packet, and after receiving the second downlink data packet, obtains the service packet information of the second downlink data packet.

S905: Determine, based on the stored correspondence between the service packet information and the first PON port, that a forwarding port of the second downlink data packet is the first PON port.

Specifically, when the network processing unit 210 obtains the service packet information of the second downlink data packet and finds that the second downlink data packet is a data packet other than the first downlink data packet of the service flow, namely, a non-initial data packet, the network processing unit 210 does not continue to parse the service packet of the second downlink data packet, but sends the second downlink data packet to the service flow forwarding unit 220. After receiving the second downlink data packet, the service flow forwarding unit 220 determines, based on the stored correspondence between the service packet information and the first PON port, that the forwarding port of the second downlink data packet is the first PON port, and sends the second downlink data packet to a service scheduling management unit 230.

S906: Send the first downlink data packet and the second downlink data packet to the first PON port.

Specifically, when the network processing unit 210 determines that a forwarding port of the first downlink data packet is the first PON port, and the service flow forwarding unit 220 determines that the forwarding port of the second downlink data packet is the first PON port, the network processing unit 210 sends the first downlink data packet to the service scheduling management unit 230, and the service flow forwarding unit 220 sends the second downlink data packet to the service scheduling management unit 230, and sends the first downlink data packet and the second downlink data packet to the first PON port via the service scheduling management unit 230.

It should be noted that the network processing unit 210 may send the first downlink data packet to the service scheduling management unit 230 at any time before S901 to S903. This is not limited in this application.

S907: Send the first downlink data packet and the second downlink data packet.

Specifically, after receiving the first downlink data packet and the second downlink data, the first PON port in a PON module/board 240 forwards the first downlink data packet to a downstream device or a downstream node.

It should be understood that, time at which the first downlink data packet arrives at the service scheduling management unit 230 may be different from time at which the second downlink data packet arrives at the service scheduling management unit 230. In addition, time at which the first downlink data packet arrives at the first PON port may be different from time at which the second downlink data packet arrives at the first PON port. That is, the service scheduling management unit 230 may forward the first downlink data packet to the first PON port immediately after receiving the first downlink data packet, and does not need to forward the first downlink data packet and the second downlink data packet at the same time.

Based on the optical access method provided in this embodiment of this application, when receiving the non-initial data packet corresponding to the service flow, the optical access device may implement fast forwarding of the downlink data packet based on the established correspondence between the service packet information and the PON port, and does not need to perform deep parsing on the second downlink data packet. This reduces a communication delay and further improves performance of a communication system.

FIG. 10 is a schematic block diagram of an access device 1000 according to an embodiment of this application. The access device 1000 includes a transceiver unit 1010 and a processing unit 1020. The transceiver unit 1010 may implement a corresponding communication function, and the processing unit 1020 is configured to process data. The transceiver unit 1010 may also be referred to as a communication interface or a communication unit.

Optionally, the access device 1000 may further include a storage unit. The storage unit may be configured to store instructions and/or data. The processing unit 1020 may read the instructions and/or the data in the storage unit, so that the access device 1000 implements the actions S902, S903, S905, and S906 performed by the optical access device in the foregoing method embodiment (the method 900).

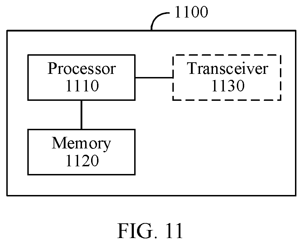

As shown in FIG. 11, an embodiment of this application further provides an access device 1100. The access device 1100 includes a processor 1110. The processor 1110 is coupled to a memory 1120. The memory 1120 is configured to store a computer program or instructions and/or data. The processor 1110 is configured to execute the computer program or the instructions and/or the data stored in the memory 1120, so that the method in the method embodiment in FIG. 9 is performed. In other words, the processor 1110 is configured to implement operations performed by the optical access device in the foregoing method embodiment.

Optionally, the access device 1100 includes one or more processors 1110.

Optionally, as shown in FIG. 11, the access device 1100 may further include the memory 1120.

Optionally, the access device 1100 may include one or more memories 1120.

Optionally, the memory 1120 and the processor 1110 may be integrated together, or are disposed separately.

Optionally, as shown in FIG. 11, the access device 1100 may further include a transceiver 1130, and the transceiver 1130 is configured to receive and/or send a signal. For example, the processor 1110 is configured to control the transceiver 1130 to receive and/or send a signal.

It may be understood that, the processor in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well known in the art. For example, a storage medium is coupled to a processor, so that the processor can read information from the storage medium and write information into the storage medium. Certainly, the storage medium may be a component of the processor. The processor and the storage medium may be disposed in an ASIC.

In addition, the optical access device provided in this embodiment of this application may be one or more chips. For example, the optical access device may be a field programmable gate array (field programmable gate array, FPGA), an application specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system and apparatus may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical access device (200), comprising: a network processing unit (210), a service flow forwarding unit (220), a service scheduling management unit (230), and at least two passive optical network, PON, ports (240), wherein
the network processing unit is configured to: after receiving a first downlink data packet, obtain service packet information of the first downlink data packet, wherein the service packet information comprises address information, a priority, and protocol information of a service packet, and the first downlink data packet is an initial data packet of a service flow;
the network processing unit determines, based on service attribute information corresponding to the service packet information, that a forwarding egress of a first downlink data packet is a first PON port of the at least two PON ports, and establishes a correspondence between the service packet information corresponding to the first downlink data packet and the first PON port, wherein the service attribute information comprises at least one of the following: a service flow attribute, a priority, a type, a traffic volume, a customer package type, and time of arrival of the first downlink data packet or the second downlink data packet;
the network processing unit sends the correspondence to the service flow forwarding unit for storage;
the network processing unit is further configured to: after receiving the second downlink data packet, obtain service packet information of the second downlink data packet;
the service flow forwarding unit determines, based on the stored correspondence between the service packet information and the first PON port, that a forwarding port of the second downlink data packet is the first PON port, wherein the second downlink data packet is a data packet other than the first downlink data packet of the service flow;
the service scheduling management unit is configured to send the first downlink data packet and the second downlink data packet to the first PON port; and
the at least two PON ports are configured to send the first downlink data packet and the second downlink data packet.

2. The device according to claim 1, wherein
the network processing unit is further configured to send the first downlink data packet to the service scheduling management unit.

3. The device according to claim 1 or 2, wherein
the service scheduling management unit sends the first downlink data packet or the second downlink data packet to the first PON port based on the service attribute information.

4. The device according to any one of claims 1 to 3, wherein the device further comprises a service distribution unit, wherein
the service distribution unit is configured to: receive the first downlink data packet and the second downlink data packet, and send the first downlink data packet and the second downlink data packet to the network processing unit.

5. The device according to any one of claims 1 to 4, wherein the device further comprises a private line straight-through unit, wherein
the private line straight-through unit is configured to transparently transmit downlink data packets that correspond to a private line service to a second PON port of the at least two PON ports.

6. The device according to any one of claims 1 to 5, wherein the device further comprises a service resource collaborative unit, wherein
the network processing unit is further configured to send the service attribute information to the service resource collaborative unit; and
the service resource collaborative unit determines a resource reservation policy or a resource orchestration policy based on the service attribute information.

7. The device according to claim 6, wherein the device further comprises at least one PON module/board, wherein the at least one PON module/board performs slice or timeslot processing on packets in the first downlink data packet and the second downlink data packet according to the resource reservation policy or the resource orchestration policy, and performs orchestration and transmission based on a preset PON frame format.

8. The device according to claim 1, wherein
at least one PON module/board is further configured to add a first identifier to the first downlink data packet and the second downlink data packet, wherein the first identifier identifies the service flow as a hard timeslot service.

9. The device according to claim 1, wherein the device further comprises a first dynamic bandwidth allocation unit and at least one PON module/board, wherein
the service scheduling management unit is configured to: receive an uplink bandwidth request, and send a scheduling policy and the uplink bandwidth request to the first dynamic bandwidth allocation unit, wherein the scheduling policy comprises: uplink interface bandwidth, a system forwarding capability, user access request bandwidth, a user service flow priority, a service value, a service delay, and a service jitter indicator requirement; and
the first dynamic bandwidth allocation unit is configured to: receive the scheduling policy and the uplink bandwidth request, and determine valid bandwidth of the at least one PON module/board based on the scheduling policy, the uplink bandwidth request, a capability of the at least one PON module/board, and the uplink interface bandwidth.

10. The device according to claim 9, wherein the at least one PON module/board comprises a second dynamic bandwidth allocation unit, and the second dynamic bandwidth allocation unit is configured to determine uplink bandwidth configurations of the at least two PON ports based on the valid bandwidth.

11. The device according to any one of claims 1 to 10, wherein the device further comprises an optical transport network, OTN, interface and an Ethernet interface, wherein
the OTN interface is configured to connect to an OTN network in an uplink direction, to implement an OTN connection service; and
the Ethernet interface is configured to connect to an IP network in an uplink direction, to implement an internet protocol IP service.

12. An optical access method, comprising:
after receiving a first downlink data packet, obtaining service packet information of the first downlink data packet, wherein the service packet information comprises address information, a priority, and protocol information of a service packet, and the first downlink data packet is an initial data packet of a service flow;
determining, based on service attribute information corresponding to the service packet information, that a forwarding egress of a first downlink data packet is a first PON port;
establishing a correspondence between the service packet information corresponding to the first downlink data packet and the first PON port, and storing the correspondence, wherein the service attribute information comprises at least one of the following: a service flow attribute, a priority, a type, a traffic volume, a customer package type, and time of arrival of the first downlink data packet or the second downlink data packet;
after receiving the second downlink data packet, obtaining service packet information of the second downlink data packet;
determining, based on the correspondence between the service packet information and the first PON port, that a forwarding port of the second downlink data packet is the first PON port, wherein the second downlink data packet is a data packet other than the first downlink data packet of the service flow;
sending the first downlink data packet and the second downlink data packet to the first PON port; and
sending the first downlink data packet and the second downlink data packet.

13. The method according to claim 12, wherein the method further comprises:
sending the first downlink data packet or the second downlink data packet to the first PON port based on the service attribute information.

14. The method according to claim 12 or 13, wherein
transparently transmitting downlink data packets that correspond to a private line service.

15. The method according to any one of claims 12 to 14, wherein the method further comprises: determining a resource reservation policy or a resource orchestration policy based on the service attribute information.

16. The method according to claim 15, wherein the method further comprises: performing slice or timeslot processing on packets in the first downlink data packet and the second downlink data packet according to the resource reservation policy or the resource orchestration policy, and performing orchestration and transmission based on a preset PON frame format.

17. The method according to claim 12, wherein the method further comprises:
adding a first identifier to the first downlink data packet and the second downlink data packet, wherein the first identifier identifies the service flow as a hard timeslot service.

18. The method according to claim 12, wherein the method further comprises:
receiving an uplink bandwidth request, and sending a scheduling policy and the uplink bandwidth request, wherein the scheduling policy comprises: uplink interface bandwidth, a system forwarding capability, user access request bandwidth, a user service flow priority, a service value, a service delay, and a service jitter indicator requirement; and
receiving the scheduling policy and the uplink bandwidth request, and determining valid bandwidth of at least one PON module/board based on the scheduling policy, the uplink bandwidth request, a capability of the at least one PON module/board, and the uplink interface bandwidth.

19. The method according to claim 18, wherein the method further comprises: determining uplink bandwidth configurations of at least two PON ports based on the valid bandwidth.

20. A network system, wherein the network system comprises an optical line terminal OLT and a plurality of optical network units ONUs, and the OLT and the ONU communicate with each other through at least one downlink wavelength channel and one or more uplink wavelength channels, wherein the OLT comprises the device according to any one of claims 1 to 11.

## Patentansprüche

1. Optische Zugangsvorrichtung (200), umfassend: eine Netzverarbeitungseinheit (210), eine Dienstflussweiterleitungseinheit (220), eine Dienstplanungsverwaltungseinheit (230) und mindestens zwei passive optische Netzanschlüsse, PON-Anschlüsse (240), wobei die Netzverarbeitungseinheit zu Folgendem konfiguriert ist: nach Empfangen eines ersten Downlink-Datenpakets, Erlangen von Dienstpaketinformationen des ersten Downlink-Datenpakets, wobei die Dienstpaketinformationen Adressinformationen, eine Priorität und Protokollinformationen eines Dienstpakets umfassen und das erste Downlink-Datenpaket ein initiales Datenpaket eines Dienstflusses ist;
die Netzverarbeitungseinheit basierend auf Dienstattributinformationen, die den Dienstpaketinformationen entsprechen, bestimmt, dass ein Weiterleitungsausgang eines ersten Downlink-Datenpakets ein erster PON-Anschluss der mindestens zwei PON-Anschlüsse ist, und eine Entsprechung zwischen den Dienstpaketinformationen, die dem ersten Downlink-Datenpaket entsprechen, und dem ersten PON-Anschluss herstellt, wobei die Dienstattributinformationen mindestens eines von Folgendem umfassen: einem Dienstflussattribut, einer Priorität, einer Art, einem Verkehrsvolumen, einer Kundenpaketart und einer Ankunftszeit des ersten Downlink-Datenpakets oder des zweiten Downlink-Datenpakets;
die Netzverarbeitungseinheit die Entsprechung zur Speicherung an die Dienstflussweiterleitungseinheit sendet;
die Netzverarbeitungseinheit ferner zu Folgendem konfiguriert ist: nach Empfangen des zweiten Downlink-Datenpakets, Erlangen von Dienstpaketinformationen des zweiten Downlink-Datenpakets; die Dienstflussweiterleitungseinheit basierend auf der gespeicherten Entsprechung zwischen den Dienstpaketinformationen und dem ersten PON-Anschluss bestimmt, dass ein Weiterleitungsanschluss des zweiten Downlink-Datenpakets der erste PON-Anschluss ist, wobei das zweite Downlink-Datenpaket ein anderes Datenpaket als das erste Downlink-Datenpaket des Dienstflusses ist;
die Dienstplanungsverwaltungseinheit dazu konfiguriert ist, das erste Downlink-Datenpaket und das zweite Downlink-Datenpaket an den ersten PON-Anschluss zu senden; und
die mindestens zwei PON-Anschlüsse dazu konfiguriert sind, das erste Downlink-Datenpaket und das zweite Downlink-Datenpaket zu senden.

2. Vorrichtung nach Anspruch 1, wobei
die Netzverarbeitungseinheit ferner dazu konfiguriert ist, das erste Downlink-Datenpaket an die Dienstplanungsverwaltungseinheit zu senden.

3. Vorrichtung nach Anspruch 1 oder 2, wobei
die Dienstplanungsverwaltungseinheit das erste Downlink-Datenpaket oder das zweite Downlink-Datenpaket basierend auf den Dienstattributinformationen an den ersten PON-Anschluss sendet.

4. Vorrichtung nach einem der Ansprüche 1 bis 3, wobei die Vorrichtung ferner eine Dienstverteilungseinheit umfasst, wobei die Dienstverteilungseinheit zu Folgendem konfiguriert ist: Empfangen des ersten Downlink-Datenpakets und des zweiten Downlink-Datenpakets und Senden des ersten Downlink-Datenpakets und des zweiten Downlink-Datenpakets an die Netzverarbeitungseinheit.

5. Vorrichtung nach einem der Ansprüche 1 bis 4, wobei die Vorrichtung ferner eine Standleitungsdurchgangseinheit umfasst, wobei
die Standleitungsdurchgangseinheit dazu konfiguriert ist, Downlink-Datenpakete, die einem Standleitungsdienst entsprechen, transparent an einen zweiten PON-Anschluss der mindestens zwei PON-Anschlüsse zu übertragen.

6. Vorrichtung nach einem der Ansprüche 1 bis 5, wobei die Vorrichtung ferner eine kollaborative Dienstressourceneinheit umfasst, wobei
die Netzverarbeitungseinheit ferner dazu konfiguriert ist, die Dienstattributinformationen an die kollaborative Dienstressourceneinheit zu senden; und
die kollaborative Dienstressourceneinheit eine Ressourcenreservierungsrichtlinie oder eine Ressourcenorchestrierungsrichtlinie basierend auf den Dienstattributinformationen bestimmt.

7. Vorrichtung nach Anspruch 6, wobei die Vorrichtung ferner mindestens ein/eine PON-Modul/-Karte umfasst, wobei das/die mindestens eine PON-Modul/-Karte eine Slice- oder Zeitschlitzverarbeitung an Paketen in dem ersten Downlink-Datenpaket und dem zweiten Downlink-Datenpaket gemäß der Ressourcenreservierungsrichtlinie oder der Ressourcenorchestrierungsrichtlinie durchführt und eine Orchestrierung und eine Übertragung basierend auf einem voreingestellten PON-Rahmenformat durchführt.

8. Vorrichtung nach Anspruch 1, wobei
mindestens ein/eine PON-Modul/-Karte ferner dazu konfiguriert ist, eine erste Kennung zu dem ersten Downlink-Datenpaket und dem zweiten Downlink-Datenpaket hinzuzufügen, wobei die erste Kennung den Dienstfluss als einen Dienst fester Zeitschlitze identifiziert.

9. Vorrichtung nach Anspruch 1, wobei die Vorrichtung ferner eine erste dynamische Bandbreitenzuweisungseinheit und mindestens ein/eine PON-Modul/-Karte umfasst, wobei
die Dienstplanungsverwaltungseinheit zu Folgendem konfiguriert ist: Empfangen einer Uplink-Bandbreitenanforderung und Senden einer Planungsrichtlinie und der Uplink-Bandbreitenanforderung an die erste dynamische Bandbreitenzuweisungseinheit, wobei die Planungsrichtlinie Folgendes umfasst: eine Uplink-Schnittstellenbandbreite, eine Systemweiterleitungskapazität, eine Benutzerzugangsanforderungsbandbreite, eine Benutzerdienstflusspriorität, einen Dienstwert, eine Dienstverzögerung und ein Dienst-Jitter-Indikatorerfordernis; und
die erste dynamische Bandbreitenzuweisungseinheit zu Folgendem konfiguriert ist: Empfangen der Planungsrichtlinie und der Uplink-Bandbreitenanforderung und Bestimmen einer gültigen Bandbreite des/der mindestens einen PON-Moduls/-Karte basierend auf der Planungsrichtlinie, der Uplink-Bandbreitenanforderung, einer Kapazität des/der mindestens einen PON-Moduls/-Karte und der Uplink-Schnittstellenbandbreite.

10. Vorrichtung nach Anspruch 9, wobei das/die mindestens eine PON-Modul/-Karte eine zweite dynamische Bandbreitenzuweisungseinheit umfasst und die zweite dynamische Bandbreitenzuweisungseinheit dazu konfiguriert ist, Uplink-Bandbreitenkonfigurationen der mindestens zwei PON-Anschlüsse basierend auf der gültigen Bandbreite zu bestimmen.

11. Vorrichtung nach einem der Ansprüche 1 bis 10, wobei die Vorrichtung ferner eine optische Transportnetzschnittstelle, OTN-Schnittstelle, und eine Ethernet-Schnittstelle umfasst, wobei
die OTN-Schnittstelle dazu konfiguriert ist, sich mit einem OTN-Netz in einer Uplink-Richtung zu verbinden, um einen OTN-Verbindungsdienst umzusetzen; und
die Ethernet-Schnittstelle dazu konfiguriert ist, sich mit einem IP-Netz in einer Uplink-Richtung zu verbinden, um einen Internetprotokolldienst, IP-Dienst, umzusetzen.

12. Optisches Zugangsverfahren, umfassend:
nach Empfangen eines ersten Downlink-Datenpakets, Erlangen von Dienstpaketinformationen des ersten Downlink-Datenpakets, wobei die Dienstpaketinformationen Adressinformationen, eine Priorität und Protokollinformationen eines Dienstpakets umfassen und das erste Downlink-Datenpaket ein initiales Datenpaket eines Dienstflusses ist;
Bestimmen, basierend auf Dienstattributinformationen, die den Dienstpaketinformationen entsprechen, dass ein Weiterleitungsausgang eines ersten Downlink-Datenpakets ein erster PON-Anschluss ist;
Herstellen einer Entsprechung zwischen den Dienstpaketinformationen, die dem ersten Downlink-Datenpaket entsprechen, und dem ersten PON-Anschluss und Speichern der Entsprechung, wobei die Dienstattributinformationen mindestens eines von Folgendem umfassen: einem Dienstflussattribut, einer Priorität, einer Art, einem Verkehrsvolumen, einer Kundenpaketart und einer Ankunftszeit des ersten Downlink-Datenpakets oder des zweiten Downlink-Datenpakets;
nach Empfangen des zweiten Downlink-Datenpakets, Erlangen von Dienstpaketinformationen des zweiten Downlink-Datenpakets;
Bestimmen, basierend auf der Entsprechung zwischen den Dienstpaketinformationen und dem ersten PON-Anschluss, dass ein Weiterleitungsanschluss des zweiten Downlink-Datenpakets der erste PON-Anschluss ist, wobei das zweite Downlink-Datenpaket ein anderes Datenpaket als das erste Downlink-Datenpaket des Dienstflusses ist;
Senden des ersten Downlink-Datenpakets und des zweiten Downlink-Datenpakets an den ersten PON-Anschluss; und
Senden des ersten Downlink-Datenpakets und des zweiten Downlink-Datenpakets.

13. Verfahren nach Anspruch 12, wobei das Verfahren ferner Folgendes umfasst:
Senden des ersten Downlink-Datenpakets oder des zweiten Downlink-Datenpakets an den ersten PON-Anschluss basierend auf den Dienstattributinformationen.

14. Verfahren nach Anspruch 12 oder 13, wobei
transparentes Übertragen von Downlink-Datenpaketen, die einem Standleitungsdienst entsprechen.

15. Verfahren nach einem der Ansprüche 12 bis 14, wobei das Verfahren ferner Folgendes umfasst: Bestimmen einer Ressourcenreservierungsrichtlinie oder einer Ressourcenorchestrierungsrichtlinie basierend auf den Dienstattributinformationen.

16. Verfahren nach Anspruch 15, wobei das Verfahren ferner Folgendes umfasst: Durchführen einer Slice- oder Zeitschlitzverarbeitung an Paketen in dem ersten Downlink-Datenpaket und dem zweiten Downlink-Datenpaket gemäß der Ressourcenreservierungsrichtlinie oder der Ressourcenorchestrierungsrichtlinie und Durchführen einer Orchestrierung und einer Übertragung basierend auf einem voreingestellten PON-Rahmenformat.

17. Verfahren nach Anspruch 12, wobei das Verfahren ferner Folgendes umfasst:
Hinzufügen einer ersten Kennung zu dem ersten Downlink-Datenpaket und dem zweiten Downlink-Datenpaket, wobei die erste Kennung den Dienstfluss als einen Dienst fester Zeitschlitze identifiziert.

18. Verfahren nach Anspruch 12, wobei das Verfahren ferner Folgendes umfasst:
Empfangen einer Uplink-Bandbreitenanforderung und Senden einer Planungsrichtlinie und der Uplink-Bandbreitenanforderung, wobei die Planungsrichtlinie Folgendes umfasst: eine Uplink-Schnittstellenbandbreite, eine Systemweiterleitungskapazität, eine Benutzerzugangsanforderungsbandbreite, eine Benutzerdienstflusspriorität, einen Dienstwert, eine Dienstverzögerung und ein Dienst-Jitter-Indikatorerfordernis; und
Empfangen der Planungsrichtlinie und der Uplink-Bandbreitenanforderung und Bestimmen einer gültigen Bandbreite mindestens eines/einer PON-Moduls/-Karte basierend auf der Planungsrichtlinie, der Uplink-Bandbreitenanforderung, einer Kapazität des/der mindestens einen PON-Moduls/-Karte und der Uplink-Schnittstellenbandbreite.

19. Verfahren nach Anspruch 18, wobei das Verfahren ferner Folgendes umfasst: Bestimmen von Uplink-Bandbreitenkonfigurationen mindestens zweier PON-Anschlüsse basierend auf der gültigen Bandbreite.

20. Netzsystem, wobei das Netzsystem ein optisches Linienendgerät, OLT, und eine Vielzahl optischer Netzeinheiten, ONUs, umfasst und das OLT und die ONU über mindestens einen Downlink-Wellenlängenkanal und einen oder mehrere Uplink-Wellenlängenkanäle miteinander kommunizieren, wobei das OLT die Vorrichtung nach einem der Ansprüche 1 bis 11 umfasst.

## Revendications

1. Dispositif d'accès optique (200), comprenant : une unité de traitement réseau (210), une unité de transfert de flux de service (220), une unité de gestion de la planification des services (230) et au moins deux ports de réseau optique passif, PON, (240), dans lequel
l'unité de traitement réseau est configurée pour : après avoir reçu un premier paquet de données de liaison descendante, obtenir les informations du paquet de service du premier paquet de données de liaison descendante, dans lequel les informations du paquet de service comprennent les informations d'adresse, une priorité et les informations de protocole d'un paquet de service, et le premier paquet de données de liaison descendante est un paquet de données initial d'un flux de service ;
l'unité de traitement réseau détermine, sur la base des informations d'attribut de service correspondant aux informations du paquet de service, qu'une sortie de transfert d'un premier paquet de données de liaison descendante est un premier port PON parmi les au moins deux ports PON, et établit une correspondance entre les informations du paquet de service correspondant au premier paquet de données de liaison descendante et le premier port PON, dans lequel les informations d'attribut de service comprennent au moins l'un des éléments suivants : un attribut de flux de service, une priorité, un type, un volume de trafic, un type de paquet client et l'heure d'arrivée du premier paquet de données de liaison descendante ou du second paquet de données de liaison descendante ;
l'unité de traitement réseau envoie la correspondance à l'unité de transfert de flux de service pour stockage ;
l'unité de traitement réseau est en outre configurée pour :
après avoir reçu le second paquet de données de liaison descendante, obtenir les informations du paquet de service du second paquet de données de liaison descendante ;
l'unité de transfert de flux de service détermine, sur la base de la correspondance stockée entre les informations du paquet de service et le premier port PON, qu'un port de transfert du second paquet de données de liaison descendante est le premier port PON, dans lequel le second paquet de données de liaison descendante est un paquet de données autre que le premier paquet de données de liaison descendante du flux de service ;
l'unité de gestion de la planification des services est configurée pour envoyer le premier paquet de données de liaison descendante et le second paquet de données de liaison descendante au premier port PON ; et
les au moins deux ports PON sont configurés pour envoyer le premier paquet de données de liaison descendante et le second paquet de données de liaison descendante.

2. Dispositif selon la revendication 1, dans lequel
l'unité de traitement réseau est en outre configurée pour envoyer le premier paquet de données de liaison descendante à l'unité de gestion de la planification des services.

3. Dispositif selon la revendication 1 ou 2, dans lequel
l'unité de gestion de la planification des services envoie le premier paquet de données de liaison descendante ou le second paquet de données de liaison descendante au premier port PON sur la base des informations d'attribut de service.

4. Dispositif selon l'une quelconque des revendications 1 à 3, dans lequel le dispositif comprend en outre une unité de distribution de services, dans lequel
l'unité de distribution de service est configurée pour : recevoir le premier paquet de données de liaison descendante et le second paquet de données de liaison descendante, et envoyer le premier paquet de données de liaison descendante et le second paquet de données de liaison descendante à l'unité de traitement réseau.

5. Dispositif selon l'une quelconque des revendications 1 à 4, dans lequel le dispositif comprend en outre une unité de ligne privée directe, dans lequel
l'unité de ligne privée directe est configurée pour transmettre de manière transparente les paquets de données de liaison descendante correspondant à un service de ligne privée vers un second port PON parmi les au moins deux ports PON.

6. Dispositif selon l'une quelconque des revendications 1 à 5, dans lequel le dispositif comprend en outre une unité collaborative de ressources de service, dans lequel
l'unité de traitement réseau est en outre configurée pour envoyer les informations d'attribut de service à l'unité collaborative de ressources de service ; et
l'unité collaborative de ressources de service détermine une politique de réservation de ressources ou une politique d'orchestration de ressources sur la base des informations d'attributs de service.

7. Dispositif selon la revendication 6, dans lequel le dispositif comprend en outre au moins un module/une carte PON, dans lequel l'au moins un module/une carte PON réalise un traitement par tranche ou par créneau temporel sur les paquets du premier paquet de données de liaison descendante et du second paquet de données de liaison descendante selon la politique de réservation de ressources ou la politique d'orchestration de ressources, et réalise l'orchestration et la transmission sur la base d'un format de trame PON prédéfini.

8. Dispositif selon la revendication 1, dans lequel au moins un module/une carte PON est en outre configuré(e) pour ajouter un premier identifiant au premier paquet de données de liaison descendante et au second paquet de données de liaison descendante, dans lequel le premier identifiant identifie le flux de service comme un service à créneau horaire strict.

9. Dispositif selon la revendication 1, dans lequel le dispositif comprend en outre une première unité d'allocation dynamique de bande passante et au moins un module/une carte PON, dans lequel
l'unité de gestion de la planification des services est configurée pour : recevoir une demande de bande passante de liaison montante et envoyer une politique de planification et la demande de bande passante de liaison montante à la première unité d'allocation dynamique de bande passante, dans lequel la politique de planification comprend : une bande passante de l'interface de liaison montante, une capacité de transfert du système, une bande passante de la demande d'accès utilisateur, une priorité du flux de service utilisateur, une valeur de service, un délai de service et une exigence d'indicateur de gigue de service ; et
la première unité d'allocation dynamique de bande passante est configurée pour : recevoir la politique de planification et la demande de bande passante de liaison montante, et déterminer la bande passante valide de l'au moins un module/une carte PON sur la base de la politique de planification, de la demande de bande passante de liaison montante, d'une capacité de l'au moins un module/une carte PON et de la bande passante de l'interface de liaison montante.

10. Dispositif selon la revendication 9, dans lequel l'au moins un module/une carte PON comprend une seconde unité d'allocation de bande passante dynamique, et la seconde unité d'allocation de bande passante dynamique est configurée pour déterminer les configurations de bande passante de liaison montante des au moins deux ports PON sur la base de la bande passante valide.

11. Dispositif selon l'une quelconque des revendications 1 à 10, dans lequel le dispositif comprend en outre une interface de réseau de transport optique, OTN, et une interface Ethernet, dans lequel
l'interface OTN est configurée pour se connecter à un réseau OTN en liaison montante, afin de mettre en œuvre un service de connexion OTN ; et
l'interface Ethernet est configurée pour se connecter à un réseau IP en liaison montante, afin de mettre en œuvre un service de protocole Internet IP.

12. Procédé d'accès optique, comprenant :
après réception d'un premier paquet de données de liaison descendante, l'obtention des informations du paquet de service du premier paquet de données de liaison descendante, dans lequel les informations du paquet de service comprennent les informations d'adresse, une priorité et les informations de protocole d'un paquet de service, et le premier paquet de données de liaison descendante est un paquet de données initial d'un flux de service ;
le fait de déterminer, sur la base des informations d'attribut de service correspondant aux informations du paquet de service, qu'une sortie de transfert d'un premier paquet de données de liaison descendante est un premier port PON ;
l'établissement d'une correspondance entre les informations du paquet de service correspondant au premier paquet de données de liaison descendante et au premier port PON, et le stockage de la correspondance, dans lequel les informations d'attribut de service comprennent au moins l'un des éléments suivants : un attribut de flux de service, une priorité, un type, un volume de trafic, un type de paquet client et l'heure d'arrivée du premier paquet de données de liaison descendante ou du second paquet de données de liaison descendante ;
après réception du second paquet de données de liaison descendante, l'obtention des informations du paquet de service du second paquet de données de liaison descendante ;
le fait de déterminer, sur la base de la correspondance entre les informations du paquet de service et le premier port PON, qu'un port de transfert du second paquet de données de liaison descendante est le premier port PON, dans lequel le second paquet de données de liaison descendante est un paquet de données autre que le premier paquet de données de liaison descendante du flux de service ;
l'envoi du premier paquet de données de liaison descendante et du second paquet de données de liaison descendante au premier port PON ; et
l'envoi du premier paquet de données de liaison descendante et du second paquet de données de liaison descendante.

13. Procédé selon la revendication 12, dans lequel le procédé comprend en outre :
l'envoi du premier paquet de données de liaison descendante ou du second paquet de données de liaison descendante au premier port PON sur la base des informations d'attribut de service.

14. Procédé selon la revendication 12 ou 13, dans lequel
la transmission transparente des paquets de données de liaison descendantes qui correspondent à un service de ligne privée.

15. Procédé selon l'une quelconque des revendications 12 à 14, dans lequel le procédé comprend en outre : la détermination d'une politique de réservation de ressources ou d'une politique d'orchestration de ressources sur la base des informations d'attribut de service.

16. Procédé selon la revendication 15, dans lequel le procédé comprend en outre : la réalisation d'un traitement par tranche ou par créneau temporel sur les paquets du premier paquet de données de liaison descendante et du second paquet de données de liaison descendante selon la politique de réservation de ressources ou la politique d'orchestration des ressources, et la réalisation d'une orchestration et d'une transmission sur la base d'un format de trame PON prédéfini.

17. Procédé selon la revendication 12, dans lequel le procédé comprend en outre :
l'ajout d'un premier identifiant au premier paquet de données de liaison descendante et au second paquet de données de liaison descendante, dans lequel le premier identifiant identifie le flux de service comme un service à créneau horaire strict.

18. Procédé selon la revendication 12, dans lequel le procédé comprend en outre :
la réception d'une demande de bande passante de liaison montante et l'envoi d'une politique de planification et de la demande de bande passante de liaison montante, dans lequel la politique de planification comprenant : la bande passante de l'interface de liaison montante, une capacité de transfert du système, la bande passante de la demande d'accès utilisateur, une priorité de flux de service utilisateur, une valeur de service, un délai de service et une exigence d'indicateur de gigue de service ; et
la réception de la politique de planification et de la demande de bande passante de liaison montante, et la détermination de la bande passante valide d'au moins un module/une carte PON sur la base de la politique de planification, de la demande de bande passante de liaison montante, d'une capacité de l'au moins un module/une carte PON et de la bande passante de l'interface de liaison montante.

19. Procédé selon la revendication 18, dans lequel le procédé comprend en outre : la détermination des configurations de bande passante de liaison montante d'au moins deux ports PON sur la base de la bande passante valide.

20. Système de réseau, dans lequel le système de réseau comprend un terminal de ligne optique OLT et une pluralité d'unités de réseau optique ONU, et l'OLT et l'ONU communiquent entre eux par l'intermédiaire d'au moins un canal de longueur d'onde de liaison descendante et d'un ou plusieurs canaux de longueur d'onde de liaison montante, dans lequel l'OLT comprend le dispositif selon l'une quelconque des revendications 1 à 11.
